# EUROPÄISCHE PATENTANMELDUNG

(11) **EP 4 723 070 A1**
(43) Veröffentlichungstag der Anmeldung: **08.04.2026**
(21) Anmeldenummer: 25206308.6
(22) Anmeldetag: 02.10.2025
(51) Int. Cl.: G07F 9/02, G01G 19/00, G06Q 10/087, G07F 11/62, G07G 1/00, G07F 9/00

(54) **VERKAUFSVORRICHTUNG FÜR EINEN VERKAUF VON WAREN**

(30) Priorität: 02.10.2024 DE 102024128670
(71) Anmelder: Meal Revolution GmbH, 09116 Chemnitz (DE)
(72) Erfinder: FROMM, Christopher, 09116 Chemnitz (DE)
(74) Vertreter: Mathys & Squire

(57) **Zusammenfassung**

Die vorliegende Erfindung betrifft eine Verkaufsvorrichtung (10) für einen Verkauf von Waren (W), aufweisend ein Verkaufsvolumen (20), in welchem wenigstens zwei Aufnahmevorrichtungen (30) für eine Aufnahme der Waren (W) angeordnet sind, wobei das Verkaufsvolumen (20) einen mit einer Zugangstür (22) reversibel verschlossenen Zugangsabschnitt (24) aufweist für ein Einbringen von Waren (W) in und ein Ausbringen von Waren (W) aus dem Verkaufsvolumen (20), wobei auf wenigstens zwei Aufnahmevorrichtungen (30) zumindest zwei Gewichtssensoren (32) angeordnet sind für ein Erzeugen eines Waren-Gewichtssignals (WGS) zu einer oder mehreren auf der Aufnahmevorrichtung (30) angeordneten Waren (W) jeweils an einer Gewichtssensor-Position der Aufnahmevorrichtung (30), **dadurch gekennzeichnet, dass** auf den wenigstens zwei Aufnahmevorrichtungen (30) mit Gewichtssensoren (32) zumindest ein lokales Verarbeitungsmodul (34) angeordnet ist, welches signalkommunizierend mit den Gewichtssensoren (32) der jeweiligen Aufnahmevorrichtung (30) verbunden und zumindest für eine Teilverarbeitung der Waren-Gewichtssignale (WGS) zur Erzeugung von Waren-Bewegungssignalen (WBS) ausgebildet ist, wobei die Verkaufsvorrichtung (10) weiter ein Auswertmodul (40) aufweist, welches mit den Verarbeitungsmodulen (34) signalkommunizierend verbunden ist für ein Auswerten der Waren-Bewegungssignale (WBS) zu Waren-Metasignalen (WMS) für den Verkauf der Waren (W).

## Beschreibung

Die vorliegende Erfindung betrifft eine Verkaufsvorrichtung für einen Verkauf von Waren, ein Erkennungsverfahren für eine Erkennung von bewegten Waren bei einer solchen Verkaufsvorrichtung, ein Computerprogrammprodukt zur Durchführung eines solchen Erkennungsverfahrens und ein Verkaufssystem mit wenigstens zwei Verkaufsvorrichtungen.

Es ist bekannt, dass Verkaufsautomaten eingesetzt werden, um Waren zu verkaufen. Verkaufsautomaten sind beispielsweise an Bahnhöfen, in öffentlichen Bereichen, aber auch in Hotels oder Kantinen im Einsatz. Die bekannten Verkaufsautomaten sind dabei üblicherweise so ausgelegt, dass sie ohne Bedienpersonal direkt vom Kunden bedient werden können. Für den Kaufvorgang muss der Kunde ein Produkt oder eine Ware auswählen, diese bezahlen und anschließend entgegennehmen. Hierfür sind die bekannten Verkaufsautomaten mit Fördervorrichtungen, beispielsweise spiralförmigen Förderelementen, ausgestattet, um im Anschluss an den Bezahlvorgang das jeweilige ausgewählte und bezahlte Produkt in einen Ausgabebereich zu fördern, welcher für den Kunden zugänglich ist.

Nachteilhaft bei den bekannten Lösungen ist es, dass durch die automatische Fördernotenwendigkeit für die jeweilige Ware die verkaufbaren Warentypen beschränkt sind. Daher sind die bekannten Verkaufsautomaten üblicherweise für einfache Produkte, wie Schokoriegel, Chipstüten oder Ähnliches ausgebildet. Komplexere oder sensiblere Produkte, beispielsweise Salate, Sandwiches, fertige Gerichte oder Ähnliches werden nur bedingt in solchen Verkaufsautomaten angeboten. Auch ist eine Kombination unterschiedlicher Warentypen, beispielsweise Getränkeflaschen und Snacks in einem einzigen Automaten bisher nicht oder nur schwer umsetzbar. Weitere Nachteile bekannter Lösungen liegen zum Beispiel in der fehlenden Vernetzbarkeit. So ist eine Einbindung in ein Warenwirtschaftssystem bisher nicht oder nur sehr umständlich möglich. Auch eine tiefergehende Analyse der umgesetzten Ware kann bisher nicht erfolgen. Auch der Kaufprozess selbst ist für den Kunden relativ langsam. Rückgaben oder Stornierungen sind an den bekannten Automaten überhaupt nicht möglich. Ein weiterer Nachteil ist es, dass der Kunde das Produkt nicht begutachten kann, bevor er es kauft. Vielmehr ist der Bezahlvorgang abzuschließen bevor das Produkt in die Hände des Kunden gelangt. Bei teuren oder hinsichtlich der Haltbarkeit anfälligen Produkten kann dies dazu führen, dass die Akzeptanz bei den Kunden deutlich sinkt und daher weniger Umsatz mit den bekannten Automaten erzielt wird.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Verkaufsvorgang und die Kontrollierbarkeit des Verkaufsvorgangs zu verbessern und damit gleichzeitig das Warenangebot zu erweitern.

Die voranstehende Aufgabe wird gelöst durch eine Verkaufsvorrichtung mit den Merkmalen des Anspruchs 1, ein Erkennungsverfahren mit den Merkmalen des Anspruchs 9, ein Computerprogrammprodukt mit den Merkmalen des Anspruchs 14 sowie ein Verkaufssystem mit den Merkmalen des Anspruchs 15. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Verkaufsvorrichtung beschrieben sind, selbstverständlich auch im Zusammenhang mit dem erfindungsgemäßen Erkennungsverfahren, dem erfindungsgemäßen Computerprogrammprodukt sowie dem erfindungsgemäßen Verkaufssystem und jeweils umgekehrt, sodass bezüglich der Offenbarung zu den einzelnen Erfindungsaspekten stets wechselseitig Bezug genommen wird beziehungsweise werden kann.

Erfindungsgemäß ist eine Verkaufsvorrichtung vorgesehen für einen Verkauf von Waren. Diese Verkaufsvorrichtung weist ein Verkaufsvolumen auf, in welchem wenigstens zwei Aufnahmevorrichtungen für eine Aufnahme der Waren angeordnet sind. Das Verkaufsvolumen ist mit einem Zugangsabschnitt ausgestattet für ein Einbringen von Waren in und ein Ausbringen von Waren aus dem Verkaufsvolumen. Dieser Zugangsabschnitt ist reversibel mit einer Zugangstür verschlossen. Auf wenigstens zwei der Aufnahmevorrichtungen sind zumindest zwei Gewichtssensoren angeordnet für ein Erzeugen eines Waren-Gewichtsignals zu einer oder mehreren auf der Aufnahmevorrichtung angeordneten Waren jeweils an einer Gewichtssensor-Position der Aufnahmevorrichtung. Eine erfindungsgemäße Verkaufsvorrichtung zeichnet sich dadurch aus, dass auf den wenigstens zwei Aufnahmevorrichtungen mit Gewichtssensoren zumindest ein lokales Verarbeitungsmodul angeordnet ist, welches signalkommunizierend mit den Gewichtssensoren der jeweiligen Aufnahmevorrichtung verbunden ist. Die lokalen Verarbeitungsmodule sind ausgebildet für eine Teilverarbeitung der Waren-Gewichtssignale zur Erzeugung von Waren-Bewegungssignalen. Die Verkaufsvorrichtung weist darüber hinaus noch ein Auswertmodul auf, welches mit den Verarbeitungsmodulen signalkommunizierend verbunden ist für ein Auswerten der Waren-Bewegungssignale zu Waren-Metasignalen für den Verkauf der Waren.

Der erfindungsgemäße Kerngedanke beruht darauf, dass ein besonders einfacher Verkaufsvorgang ohne automatische Förderschnecken oder andere Fördervorrichtungen für die Waren, wie bei den bekannten Verkaufsautomaten, stattfinden kann. So kann das Verkaufsvolumen entsprechend über die Zugangsttür für einen Kunden im Wesentlichen frei zugänglich sein. Die Zugangstür kann immer entriegelt, aber auch verriegelt sein, sodass der Zugang nur unter dem Vorbehalt einer Verifikation des bedienenden Kunden möglich ist. Eine solche Verifikation kann beispielsweise mittels einer App, physischen Zugangskarten, aber auch Bezahlmöglichkeiten, beispielsweise der Nutzung von Kreditkarten, gegeben sein. Nachfolgend werden die erfindungsgemäßen Vorteile anhand eines Verkaufsvorgangs näher erläutert. Auf diese Weise kann, insbesondere mittels des Auswertmoduls, die Verifikation und/oder der Prüfung einer Bezahlmöglichkeit abgeschlossen sein, bevor die Zugangstür entriegelt und damit der Zugang zum Verkaufsvolumen freigegeben wird.

Eine mögliche Verifikation per App erfolgt durch eine entsprechende Software auf einem Mobilgerät eines Kunden, welche insbesondere auch Zahlungsinformationen bereits in der App hinterlegt hat. Zusätzlich oder alternativ ist auch eine Variante einer App für den Betreiber der Verkaufsvorrichtung einsetzbar, welcher auf diese Weise Zugang zum Verkaufsvolumen für einen Nachfüllvorgang erhält. Die Kommunikation zwischen der App und der Verkaufsvorrichtung kann dabei lokal und damit direkt zwischen dem Mobilgerät und insbesondere dem Auswertmodul erfolgen. Auch eine indirekte Kommunikation über einen zentralen Kontrollserver eines Verkaufssystems ist jedoch im Rahmen der vorliegenden Erfindung denkbar.

Der Verkaufsvorgang startet damit, dass ein Kunde zur Verkaufsvorrichtung geht und sich zum Beispiel an der Verkaufsvorrichtung identifiziert. Die Identifikation erfolgt beispielsweise über eine physische Zugangskarte, welche zum Beispiel mittels eines Lesegeräts an der Verkaufsvorrichtung lesbar ist. Alternativ kann eine App auf einem Mobilgerät des Kunden oder eine Bezahlkarte, beispielsweis in Form einer Kreditkarte, für eine Identifikation des Kunden verwendet werden. Auch andere Identifikationsmöglichkeiten sind denkbar, beispielsweise die Verwendung von Pin Codes oder von biometrischen Sensoren, wie Fingerabdruckscannern oder ähnlichem. Zusätzlich oder alternativ zu einer reinen Identifikation kann auch eine Altersverifizierung durchgeführt werden, wenn beispielsweise alkoholhaltige Waren verkauft werden sollen. Hier sind zusätzliche Eingabemöglichkeiten für ein Scannen von offiziellen Dokumenten wie Führerschein oder Ausweis denkbar. Ist der Kunde identifiziert und insbesondere auch die gewünschte Zahlungsart ausgewählt und vorzugsweise auch verifiziert, so kann die Verkaufsvorrichtung die Zugangstür entriegeln und der Kunde diese öffnen. Durch den Zugangsabschnitt kann der Kunde nun eine gewünschte Ware herausnehmen, begutachten und sich entweder für den Kauf entscheiden oder die Ware auch wieder zurücklegen. Beim Entnehmen der Ware hebt der Kunde die Ware von der jeweiligen Aufnahmevorrichtung an und führt sie mit der Hand durch den Zugangsabschnitt, was einem Entnehmen der Ware aus dem Verkaufsvolumen entspricht. In dem Moment, in welchem die Ware nicht mehr auf der Aufnahmevorrichtung steht, wird sich entsprechend das Waren-Gewichtssignal des jeweiligen Gewichtssensors diese Aufnahmevorrichtung ändern und/oder ein Waren-Gewichtssignal erzeugt. Solche Waren-Gewichtssignale werden beispielsweise durch einfache Gewichtssensoren in Form von Spannungswerten und/oder Stromwerten zur Verfügung gestellt, sodass eine Änderung dieses jeweiligen physikalischen messbaren Wertes einer Änderung des darauf angeordneten Gewichts entspricht. Gleiches gilt auch bei einem Zurückstellen der Ware oder bei einem Befüllen des Verkaufsvolumens mit frischer Ware.

Erfindungsgemäß werden diese Waren-Gewichtssignale nun von dem jeweils erkennenden Gewichtssensor an das lokale Verarbeitungsmodul der jeweiligen Aufnahmevorrichtung weitergeleitet. In diesem lokalen Verarbeitungsmodul erfolgt nun zumindest eine Teilverarbeitung oder auch eine Vorverarbeitung des empfangenen Waren-Gewichtssignals. Beispielsweise kann im einfachsten Fall aus dem empfangenen Stromwert ein zugehörige Gewichtswert, also beispielsweise eine Information über das entnommene Warengewicht der bewegten Ware ermittelt werden. So kann beispielsweise aus dem Stromwert über einen algorithmisch hinterlegten Zusammenhang berechnet werden, dass die Ware, welche aktuell bewegt worden ist, eine Gewichtsreduktion von 350 g zur Folge hatte. In dem lokalen Verarbeitungsmodul kann dabei auch eine zusätzliche Verarbeitung erfolgen, welche beispielsweise auf dort gespeicherten Verarbeitungsdaten erfolgt. Diese können zum Beispiel für die einzelnen Gewichtssensor-Positionen bestimmte Ware und/oder Warentypen gespeichert haben. Damit ist eine Prüfung möglich, ob der Gewichtswert der bewegten Ware mit den Gewichtswerten, der in der Verarbeitungsdaten gespeicherten Ware oder Warentypen übereinstimmt. Im einfachsten Fall handelt es sich hier um eine Plausibilitätsprüfung und den Vergleich der bewegten Ware mit den gespeicherten Warendatenbank für diese Aufnahmevorrichtung.

Eine Aufnahmevorrichtung kann dabei, wie später noch näher erläutert, ein oder mehrere lokale Verarbeitungsmodule aufweisen. Diese sind insbesondere auch zur Stromversorgung mit dem Auswertmodul verbunden. Auch die Versorgung der einzelnen Gewichtssensoren erfolgt zentral über deren Verbindung zu dem jeweiligen lokalen Verarbeitungsmodul. Vorzugsweise ist eine Verkabelung zwischen den einzelnen Komponenten vorgesehen, welche die Signalkommunikation und die Stromversorgung miteinander kombiniert.

Die Verarbeitungsmodule können dabei insbesondere speziell entwickelte und gefertigte elektronische Bauteilsystem, zum Beispiel in Form von Printed Circuit Boards (PCB) sein.

Auch bidirektionale Kommunikation ist im Rahmen der vorliegenden Erfindung, insbesondere zwischen den lokalen Verarbeitungsmodulen einerseits und dem zentralen Auswertmodul andererseits denkbar. So können beispielsweise Abfragen oder Plausibilitätsprüfungen von dem Auswertmodul an die Verarbeitungsmodule übermittelt werden, um beispielsweise Fehlauswertungen zu vermeiden. Wird zum Beispiel eine Ware entnommen, so kann dies auch bei benachbarten Aufnahmetabletts der gleichen Aufnahmevorrichtung zu einer Schwankung der erfassten Gewichte führen. Insbesondere können Schwingungen dieses benachbarten Aufnahmetabletts entstehen, welche fälschlicherweise als Warenentnahme erkennbar sein könnten. Hier kann das übergeordnete Auswertmodul eingreifen und entweder aktiv eine Plausibilitätsprüfung bei dem jeweiligen Verarbeitungsmodul anfragen und/oder direkt diese Fehlinterpretation wieder löschen. Insbesondere ist dies mit Schwankungsschwellwerten für den Gewichtswert ausgebildet, welche auch als Entprellschwellwerte bezeichnet werden können.

Entscheidet sich der Kunde nun diese Ware tatsächlich zu kaufen, so kann er dies durch Interaktion zum Beispiel mit einer Anzeigevorrichtung oder mit einer App auf seinem Mobiltelefon bestätigen. Innerhalb der Verkaufsvorrichtung werden die erzeugten Waren-Bewegungssignale, also die Information über welches Gewicht an welcher Position auf welcher Aufnahmevorrichtung die Bewegung stattgefunden hat, an das Auswertmodul weitergeben. Auch ein Prüfungsergebnis, wie voranstehend beschrieben, kann Bestandteil der Waren-Bewegungsdaten sein.

Alternativ oder zusätzlich zu Anzeigevorrichtungen sind erfindungsgemäße Verkaufsvorrichtungen auch mit Audioschnittstellen ausstattbar. Darunter kann eine Audioausgabe zum Beispiel mittels eines Lautsprechers und/oder eine Audioeingabe zum Beispiel in Form eines Mikrofons zur Interaktion mit dem Kunden und/oder einem Betreiber der Verkaufsvorrichtung verwendet werden. So kann zum Beispiel per Sprache eine Kommunikation erfolgen, welche eine Spracherkennung und/oder eine Sprachmodulation zum Beispiel im Auswertmodul ermöglicht. Auch ist es denkbar, dass Audioausgabemittel und/oder Audioeingabemittel einer Mobilvorrichtung des Kunden und/oder des Betreibers verwendet werden, um diese Kommunikation durchzurühren.

Neben reinen Kommunikationsaufgaben kann auch zumindest ein Teil einer Identifikation und/oder einer Verifikation einer Person durch eine solche Audioschnittstelle erfolgen. Durch Stimmanalyse und/oder durch Erkennen eines gesprochenen Passwortes oder Passcodes kann eine Identifikation einer Person als Kunde und/oder als Betreiber/Befüller der Verkaufsvorrichtung durchgeführt werden. Bei einer Interaktion mit einem Kunden kann auch eine bidirektionale Kommunikation zwischen der Verkaufsvorrichtung und dem Kunden, ähnlich einem Chatbot, erfolgen. Bei einer solchen Ausführungsform kann insbesondere auf eine physische Anzeigevorrichtung verzichtet werden, ohne die Kommunikationsfähigkeit der Verkaufsvorrichtung einzuschränken.

Auch die im Rahmen dieser Beschreibung erläuterten Informationsausgaben an den Kunden, beispielsweise eines Alarmsignals, können über eine solche Audioschnittstelle laufen.

Das Auswertmodul ist nun in der Lage, aus diesem Waren-Bewegungssignal, beispielsweise der Information, dass ein bestimmter Salat als Ware des Warentyps Salat mit Hühnchen bewegt worden ist, ein Waren-Metasignal zu erzeugen, welches zusätzliche Informationen in Betracht ziehen kann. Insbesondere handelt es sich bei dem Waren-Metasignal um Informationen und Daten, welche mit dem Verkaufsvorgang korrelieren. Wie später noch näher erläutert wird, können Waren-Metasignale Informationen zur Haltbarkeit der Ware, zu einem hinterlegten Preis der Ware, aber auch komplexere Informationen zu aktuellen Temperatursituationen, Angebotszeitperioden oder Ähnlichem beinhalten. Auch weiterführende Informationen können einen Bestandteil der Waren-Metasignale ausbilden, beispielsweise Details zur Warenart, Nährwerte und/oder die Kalorienanzahl der bewegten Ware.

Die Waren-Metasignale können direkt auf einer Anzeigevorrichtung dargestellt und angezeigt werden, insbesondere aber auch für einen Bezahlvorgang über ein mobiles Endgerät und ein Bezahlterminal an der Verkaufsvorrichtung verwendet werden. Im einfachsten Fall enthält das Waren-Metasignal zumindest den Preis des bewegten und erkannten Produkts. So kann in dem Auswertmodul mittels dort gespeicherter Auswertdaten eine Korrelation zwischen der erkannten, bewegten Ware und dem Preis für diesen Warentyp oder sogar die individuelle bewegte Ware bestimmt werden. Mit diesem Preis kann dann der Bezahlvorgang durchgeführt oder abgeschlossen und der Kaufvorgang beendet werden.

Auch ein Befüllen des Verkaufsvolumens mit frischer Ware ist in umgekehrter Richtung in gleicher Weise möglich. So kann beim Befüllen die Ware beim Platzieren auf der Aufnahmevorrichtung erkannt werden. Mittels der Vorverarbeitung in den Verarbeitungsmodulen kann die Korrektheit der Platzierten Ware geprüft werden oder auch bei freier Bestückung die platzierte Ware in den Verarbeitungsdaten für den zukünftigen Verkaufsvorgang gespeichert werden. Damit ist ein flexibles und damit vollkommen freies Bestücken denkbar. In dem Auswertmodul kann dann die Zuordnung beispielsweise zum Preis der jeweils frei platzierten Ware in den Auswertdaten hinterlegt werden und sogar ein Upload in den später noch erläuterten Kontrollserver erfolgen.

Wie aus der Erläuterung eines Verkaufsvorgangs ersichtlich wird, sind nun im Wesentlichen zwei voneinander separate Verarbeitungsvorgänge vorgesehen. Zum einen erfolgt eine lokale Teilverarbeitung der physikalisch gemessenen Waren-Gewichtssignale in den lokalen Verarbeitungsmodulen. Hier kann zum Beispiel auf Verarbeitungsdatenbanken mit Verarbeitungsdaten zurückgegriffen werden, in welchen hinterlegt ist, welche Waren, mit welchem Gewicht auf der jeweiligen Aufnahmevorrichtung angeordnet sind. Im einfachsten Fall reicht es jedoch auch aus, wenn diese Verarbeitungsmodule in der Lage sind durch einen algorithmischen Zusammenhang aus dem gemessenen physikalischen Stromsignal des Waren-Gewichtssignals ein Waren-Bewegungssignal, hinsichtlich der Position, des Gewichts und/oder des Warentyps zu erzeugen.

Durch die lokale Anordnung der Verarbeitungsmodule erfolgt dieser erste Teilverarbeitungsschritt mit sehr hoher Geschwindigkeit und insbesondere durch die Anordnung direkt auf der Aufnahmevorrichtung auch spezifisch für die jeweilige Aufnahmevorrichtung in dem Verkaufsvolumen. Separat davon erfolgt nun eine zentrale Verarbeitung dieser vorbereiteten, weil schon teilverarbeiteten, Waren-Bewegungssignale in einem zentralen Auswertmodul. Dieses zentrale Auswertmodul kann dabei zum Beispiel an einem Seitenbereich der Verkaufsvorrichtung angeordnet sein, sodass entsprechend eine zentrale Haupt- oder Endverarbeitungsmöglichkeit gegeben ist. Insbesondere handelt es sich um genau ein Auswertmodul, welches die finale Endauswertung von allen Waren-Bewegungssignalen aller lokalen Verarbeitungsmodule durchführt. Durch die Vorverarbeitung an den lokalen Verarbeitungsmodulen ist der Endverarbeitungsaufwand am Auswertmodul entsprechend reduziert.

Eine mögliche Ausgestaltung eines solchen Auswertmoduls kann entsprechend kostengünstig, einfach und klein beispielsweise durch einen Minicomputer durchgeführt werden, welcher als für die Verkaufsvorrichtung spezifischer Minicomputer entwickelt und gefertigt wurde. Die lokalen Verarbeitungsmodule können aufgrund der sehr begrenzten Teilverarbeitung, die dort durchgeführt wird, durch einfache PCBs (Printed Circuit Boards) zur Verfügung gestellt werden.

Insbesondere sind dort nur einfache Prozessoren oder Mikroelektronikschaltungen notwendig, um entsprechend mit geringem Kostenaufwand und gleichzeitig hoher Verarbeitungsgeschwindigkeit die Teilverarbeitung der Waren-Gewichtssignale in Waren-Bewegungssignale durchzuführen.

Wie aus der voranstehenden Erläuterung ersichtlich wird, werden durch die geringfügige Erhöhung der Komplexität durch das Vorsehen einer Vielzahl lokaler Verarbeitungsmodule in Kommunikation mit einem zentralen Auswertmodul wesentliche Vorteile erzielt. Einer dieser wesentlichen Vorteile ist die Steigerung der Verarbeitungsgeschwindigkeit, sodass für den Kunden im Wesentlichen ohne gefühlte Verzögerung die für ihn benötigten Waren-Metasignale, beispielsweise der zu bezahlende Preis, auf der Anzeigevorrichtung angezeigt und/oder zum Beispiel für den tatsächlichen Bezahlvorgang verwendet werden können. Gleichzeitig wird durch die Trennung zwischen Teilverarbeitung und Endverarbeitung und damit zwischen lokalen Verarbeitungsmodulen und zentralem Auswertmodul auch eine Platzreduktion möglich, da insbesondere die Anforderungen an das Auswertmodul hinsichtlich ansonsten verwendeter Computervorrichtungen deutlich reduziert werden können. Nicht zuletzt werden auch die Kosten deutlich reduziert, da der Aufwand hinsichtlich der Ausgestaltung des zentralen Auswertmoduls, wie auch der lokalen Verarbeitungsmodule, deutlich geringer ist als dies für eine Recheneinheit der bekannten Lösungen der Fall ist. Neben der Platz- und Kostenreduktion ist auch ein reduzierter Energieverbrauch erzielbar, so dass im Vergleich zu den Computervorrichtung der bekannten Lösungen ein energieeffizienterer Betrieb möglich ist. Auch die beim Betrieb der Verarbeitungsmodule und des Auswertmoduls entstehende Abwärme reduziert sich auf diese Weise, so dass vor allem bei gekühlten Verkaufsvolumen eine zusätzliche Einsparung aufgrund geringerem Wärmeeintrag in den gekühlten Bereich zu erwarten ist.Wie später noch hinsichtlich des Erkennungsverfahrens näher erläutert wird, kann insbesondere in flexiblerer Weise Einfluss genommen werden auf die tatsächliche Erkennung und auf den Verkaufsvorgang. So kann durch die dezentrale Struktur der Teilverarbeitung in den Verarbeitungsmodulen trotzdem zentral im Auswertmodul die Korrelation mit den Waren-Metadaten beeinflusst werden. Dabei ist es möglich, beispielsweise flexible oder sogar zeitlich variable Preisstrukturen zu hinterlegen und/oder über einen Kontrollserver vorzugeben. Auch ist es möglich, zusätzliche Informationen, beispielsweise Kamerainformationen, Haltbarkeitsinformationen, Temperaturinformationen oder Ähnliches miteinzubinden und bei der Endverarbeitung im Auswertmodul zu berücksichtigen.

Wird eine solche Verkaufsvorrichtung in einem Verkaufssystem, wie sie später ebenfalls noch näher erläutert wird, verwendet, so führt dies dazu, dass auch von einem externen Kontrollserver eine Beeinflussung, beispielsweise hinterlegter Verarbeitungsdaten und/oder hinterlegter Auswertdaten, durchgeführt werden kann. So ist es beispielsweise möglich, eine zentrale und serverbasierte Kontrollierbarkeit solcher Verkaufsvorrichtungen vorzusehen, welche es erlaubt, von extern nicht nur die Bestückung der einzelnen Verkaufsvorrichtungen variabel zu regeln, sondern darüber hinaus auch bei bereits bestückten Verkaufsvorrichtungen Einfluss auf die durchgeführten Verkäufen und/oder die Angebote zu nehmen, indem beispielsweise Sonderangebote bestimmte Waren hervorheben, Preisgestaltungen variabel hinsichtlich Tageszeiten, Wetterbedingungen oder Ähnlichem angepasst werden können oder in anderer Weise flexibel Einfluss auf die Verkaufs- und Angebotssituation an der Verkaufsvorrichtung genommen werden kann.

Neben dem beschriebenen Zugang von einer Kundenseite kann zusätzlich auch ein Sekundärzugang zum Verkaufsvolumen, beispielsweise von der Rückseite der Verkaufsvorrichtung vorgesehen sein. Bei einer Aufstellung in einem Stadion, einer Konzerthalle oder ähnlichen Orten mit temporär sehr hoher Verkaufsfrequenz ist somit ein vom Kundenzugang unabhängiger Nachfüllzugang vorhanden, so dass ohne Störung der laufenden Verläufe ein Nachfüllen von Ware möglich ist.

Eine Aufnahmevorrichtung im Sinne der vorliegenden Erfindung kann unterschiedliche Aufnahmemöglichkeiten für die Waren aufweisen. Insbesondere sind auch Aufhängeelemente denkbar, welche einem Aufhängen dafür passender Waren dienen. Auch über die Aufhängeelemente kann die Gewichtserfassung in der beschriebenen Weise erfolgen.

Eine Möglichkeit für die Gewichtssensoren der vorliegenden Erfindung ist eine Ausbildung als Biegebalken. Dabei handelt es sich um eine besonders einfache und kostengünstige Variante der Gewichtssensoren.

Weiter ist noch darauf hinzuweisen, dass die Verkaufsvorrichtung auch zwei oder mehr voneinander getrennte Verkaufsvolumen aufweisen kann. Diese sind insbesondere mit einem gemeinsamen, zentralen Auswertmodul ausgestattet. Auch können die unterschiedlichen Verkaufsvolumen unterschiedlich temperiert sein und damit unterschiedliche Warentypen bevorraten. Nicht zuletzt sind für jedes Verkaufsvolumen separate Zugangsabschnitte und Zugangstüren denkbar.

Um die Flexibilität im Einsatz der Verkaufsvorrichtung noch weiter zu steigern ist auch eine Schnittstelle zu Drittgeräten an dem Auswertemodul denkbar. Über die Schnittstelle ist eine Signalkommunikation zu zwei oder mehr weiteren Geräten, wie Kaffeemaschinen, klassischen Snackautomaten oder ähnlichem denkbar, so dass die Endverarbeitung, insbesondere hinsichtlich einer Zahlungsverarbeitung, auch für solche Drittgeräte über das Auswertmodul erfolgen kann. Auch eine Kontrolle der Ausgabe von Kaffee an einer Kaffeemaschine und/oder von Snacks an einem Snackautomat kann bei einer solchen Ausführungsform von dem Auswertmodul kontrolliert werden. Auch die mehrfach erläuterte Einbindung in ein Warenwirtschaftssystem oder weitergehende Auswertungen kann auf diese Weise auf Drittgeräte ausgeweitet werden.

Es kann Vorteile mit sich bringen, wenn bei einer erfindungsgemäßen Verkaufsvorrichtung das Verkaufsvolumen thermisch gegen die Umgebung isoliert ist und eine Temperiervorrichtung für ein gezieltes Temperieren des Verkaufsvolumens vorgesehen ist. Unter einem Temperieren ist insbesondere ein Kühlen und/oder ein Erwärmen zu verstehen. Üblicherweise wird ein Verkaufsvorrichtung für genau eine dieser beiden Temperiermöglichkeiten ausgebildet sein, sodass es sich bei dem Verkaufsvolumen entweder um einen Kühlbereich, einen Tiefkühlbereich, einen Warmhaltebereich oder einen Erwärmungsbereich handelt. Je nachdem für welche Waren die Verkaufsvorrichtung vorgesehen ist, kann entsprechend die Temperiervorrichtung so angepasst sein, dass die gewünschten Temperaturbereiche für die Lagerung zwischen den Verkaufsvorgängen für die Waren eingehalten werden können. Auch eine zeitliche Steuerung ist denkbar, sodass beispielsweise über Perioden mit geringen Verkaufsvorgängen, beispielsweise in der Nacht, ein geringerer Kühleffekt stattfinden kann als während hochfrequentierten Verkaufsperioden, beispielsweise über die Mittagszeit, wenn von häufigen Öffnungsvorgängen der Zugangstür auszugehen ist. Hier ist gut zu erkennen, dass durch die Möglichkeit eines zentralen Auswertmoduls auch Eingriff genommen werden kann auf die Regelung der Temperiervorrichtung, sodass die Flexibilität lokal in der Verkaufsvorrichtung, aber auch zentral gesteuert über den später noch erläuterten Kontrollserver, die ökologische Effizienz der einzelnen Verkaufsvorrichtung weiter gesteigert werden kann.

Vorteile bringt es ebenfalls mit sich, wenn bei einer Verkaufsvorrichtung gemäß der vorliegenden Erfindung im Verkaufsvolumen wenigstens ein Temperatursensor angeordnet ist für ein Erzeugen eines Temperatursignals, wobei der Temperatursensor signalkommunizierend mit wenigstens einem lokalen Verarbeitungsmodul und/oder dem Auswertmodul verbunden ist. Dabei kann diese Verwendung eines Temperatursensors, insbesondere in Kombination mit der voranstehend beschriebenen Temperiervorrichtung, verwendet werden. Besonders vorteilhaft ist es, wenn das Temperatursignal zur Kontrolle des Verkaufsvorgangs und/oder zur Kontrolle der Temperiervorrichtung verwendet wird. So kann beispielsweise nachgehalten werden, ob die jeweilige Ware in dem für das Mindesthaltbarkeitsdatum notwendigen Temperaturbereich gehalten wird. Eine Ausführungsform der Erfindung beinhaltet zum Beispiel Temperatursensoren auf den Aufnahmevorrichtungen, insbesondere integriert ist die lokalen Verarbeitungsmodule. Dies erlaubt es die Temperatur im Verkaufsvolumen ortsaufgelöst zu überwachen und damit eine noch individuellere Überwachung von Kühlketten und Haltbarkeiten der Waren zur Verfügung zu stellen. Wird eine Ware als unverkäuflich definiert, beispielsweise durch Ablauf des Haltbarkeitsdatums, Unzulässige Unterbrechung der Kühlkette oder ähnliches, so kann diese Information im Auswertmodul verwendet werden, um den Status der Unverkäuflichkeit in Form einer Warnung auszugeben.

Handelt es sich hier um gekühlte Waren, so ist hier davon auszugehen, dass eine möglichst lückenlose Kühlkette eingehalten werden muss. Wird diese Kühlkette nicht eingehalten, so kann der Temperatursensor dies erkennen und entsprechend diese Ware als unverkäuflich kennzeichnen. Dies kann selbstverständlich für unterschiedliche Waren in dem Verkaufsvolumen in unterschiedlicher Weise gelten, sodass im Vergleich zu den bekannten Vollautomaten mit automatischen Fördervorrichtungen nun einzelne Waren vom Verkauf ausgeschlossen werden können. Bewegt ein Käufer eine solche vom Verkauf ausgeschlossene Ware trotzdem durch den Zugangsabschnitt kann eine entsprechender Warnhinweis angegeben werden, welcher den Kunden über die Unverkäuflichkeit dieser bereits das Haltbarkeitsdatum überschreitenden Ware informiert. Auch hier ist gut zu erkennen, wie durch die Struktur der lokalen Verarbeitungsmodule und eines zentralen Auswertmoduls eine sehr hohe Flexibilität für den Verkaufsvorgang umgesetzt werden kann. Das Ganze ist insbesondere in zentraler Weise kontrollierbar durch einen zentralen Kontrollserver, der mit Bezug auf das Verkaufssystem später noch näher erläutert wird. Nicht zuletzt kann ein solcher Temperatursensor auch für die Kontrolle des Zugangs verwendet werden. Ist beispielsweise durch mehrere hintereinander durchgeführte Verkaufsvorgänge und entsprechend häufige Öffnungen der Zugangstür die Temperatur innerhalb des Verkaufsvolumens in einen unerwünschten Bereich angestiegen oder gesunken, so kann für eine gewisse Zeitdauer der Zugang verriegelt bleiben, um einer Temperiervorrichtung ausreichend Zeit für eine Retemperierung des Verkaufsvolumens zu geben.

Darüber hinaus bringt es ebenfalls Vorteile mit sich, wenn bei einer erfindungsgemäßen Verkaufsvorrichtung auf wenigstens eine Aufnahmevorrichtung wenigstens zwei lokale Verarbeitungsmodule angeordnet sind, wobei die Anzahl der Gewichtssensoren größer als die Anzahl der Verarbeitungsmodule ist. Beispielsweise kann ein Verarbeitungsmodul mit bis zu sechs Gewichtssensoren verbunden sein und die von diesen sechs Gewichtssensoren empfangenen Waren-Gewichtssignale entsprechend teilverarbeiten. Da je nach tatsächlicher Größe der Waren auch eine größere Anzahl von beispielsweise bis zu zwölf Gewichtssensoren einsetzbar ist, kann entsprechend auch die Anzahl der lokalen Verarbeitungsmodule gesteigert werden. Die Verarbeitungsmodule können dann seriell miteinander verschaltet werden, aber auch parallel zueinander die entsprechende signalkommunizierende Verbindung zum zentralen Auswertmodul aufweisen.

Darüber hinaus bringt es Vorteile mit sich, wenn bei einer erfindungsgemäßen Verkaufsvorrichtung wenigstens eine Aufnahmevorrichtung wenigstens zwei Aufnahmetabletts aufweist, wobei die Gewichtssensoren und insbesondere auch lokale Verarbeitungsmodule zwischen den Aufnahmetabletts und einer Grundplatte der Aufnahmevorrichtung angeordnet sind. Die Aufnahmetabletts haben dementsprechend eine geringere flächige Erstreckung als dies für die Grundplatte der Fall ist. Die Grundplatte kann beispielsweise in einen Standardkühlschrank eingeschoben werden und dort auf entsprechende Auflageflächen an den Seitenwänden des Kühlschranks aufgelegt werden. Die Aufnahmetabletts können hinsichtlich ihrer Größe, insbesondre hinsichtlich ihrer Aufnahmebreite an die entsprechende Warenbreite angepasst sein, sodass je nach unterschiedlichen breiten Waren unterschiedlich breite Aufnahmetabletts eingesetzt werden können. Durch die Anordnung der Gewichtssensoren zwischen den Aufnahmetabletts und einer Grundplatte kann eine sehr einfache Zurverfügungstellung der Gewichtsmessung gewährleistet werden, da die Waren in Schwerkraftrichtung ihr Eigengewicht über das Aufnahmetablett direkt an die Gewichtssensoren übertragen. Da die Gewichtssensoren hinsichtlich ihrer seitlichen geometrischen Erstreckung deutlich kleiner ausgebildet werden können als dies für die Aufnahmetabletts gilt, kann in dem verbleibenden Freiraum in sandwichartiger Bauweise auch die Anordnung einer oder mehrerer lokaler Verarbeitungsmodule erfolgen. Hier ist gut zu erkennen, dass grundsätzlich bereits vorhandener Bauraum auch für die lokalen Verarbeitungsmodule genutzt werden kann, sodass trotz leicht gesteigerter Komplexität dieser Struktur kein zusätzlicher Bauraum für das Anordnen der lokalen Verarbeitungsmodule benötigt wird.

Ebenfalls Vorteile kann es mit sich bringen, wenn bei einer erfindungsgemäßen Verkaufsvorrichtung die Grundplatten der Aufnahmevorrichtung Zirkulationsöffnungen aufweisen für eine verbesserte Zirkulation von Luft innerhalb des Verkaufsvolumens. Solche Zirkulationsöffnungen dienen dazu Luft im Verkaufsvolumen in vertikaler Weise freier zirkulieren zu lassen, sodass insbesondere ein Temperaturausgleich über die einzelnen Fächer oder Ebenen im Verkaufsvolumen stattfinden kann. Besonders vorteilhaft ist es, wenn diese Zirkulationsöffnungen zumindest teilweise so ausgebildet sind, dass sie als mechanische Aufnahmeschnittstellen für Gewichtssensoren und/oder für die lokalen Verarbeitungsmodule ausgebildet sind. Damit kann eine Standard-Grundplatte verwendet werden, welche für unterschiedlichste Konfigurationen, unterschiedlichste Aufnahmebreiten der Aufnahmetabletts und unterschiedlichste Anzahl an Gewichtssensoren, wie auch lokaler Verarbeitungsmodule, modular und flexibel eingesetzt werden kann. Eine einzige Grundplatte kann auf diese Weise mit beliebigen Bestücksituationen klarkommen und entsprechend modular ausgestaltet werden.

Von Vorteil ist es weiter, wenn bei einer erfindungsgemäßen Verkaufsvorrichtung wenigstens eine Kameravorrichtung vorgesehen ist mit einem Erfassungsbereich, welcher den Zugangsabschnitt wenigstens abschnittsweise, insbesondere vollständig oder im Wesentlichen vollständig, abdeckt, zur optischen Erfassung von Waren beim Einbringen oder beim Ausbringen aus dem Verkaufsvolumen. Eine solche Kameravorrichtung ist nun in der Lage, visuelle Informationen zu erzeugen, welche bei der Verarbeitung des Verkaufsvorgangs zusätzlich berücksichtigt werden können. Dabei kann die Kameravorrichtung innerhalb oder außerhalb des Verkaufsvolumens angeordnet sein. Entscheidend ist, dass über den Zugangsabschnitt eine visuelle Erkennung von im Wesentlichen jeglicher Ware erfolgen kann, welche über diesen Zugangsabschnitt in das Verkaufsvolumen hinein- oder aus dem Verkaufsvolumen herausbewegt wird. Eine solche Kamera kann eine klassische Kamera zur Erfassung von Fotos oder bewegten Bildern sein, kann jedoch auch zusätzliche Informationen, wie beispielsweise Wärmebildinformationen, aufweisen. Die Kamerainformationen können zum Beispiel verwendet werden, um zusätzlich einen Warentyp zu erkennen, sodass beispielsweise mit Hilfe einer automatisierten Bildauswertung verschiedene Warentypen der bewegten Ware voneinander unterschieden werden können. Somit ist es möglich, dass die erfassten Kamerasignale entweder in dem zentralen Auswertmodul verarbeitet und bei der Erstellung der Waren-Metasignale berücksichtigt werden oder sogar diese Berücksichtigung bereits auf Ebene der lokalen Verarbeitungsmodule erfolgt. Die Kamerainformationen können selbstverständlich zusätzlich auch an einen zentralen Kontrollserver übermittelt werden, sodass dort entsprechend eine weitergehende Analyse hinsichtlich Kundenfrequenz, Kundenverkaufsdauer oder ähnlichen Informationen erfolgen kann. Nicht zuletzt wird es auch möglich sicherzustellen, dass bei einem Zurückstellen einer bewegten Ware ein Austausch mit einer falschen Ware mit einem ähnlichen Gewicht durch den Kunden erkannt werden könnte. In einem solchen Fall würde eine Warnung ausgegeben werden, ein Alarm ausgelöst werden oder die vorab verifizierte und bereits erfasste Zahlungsmöglichkeit des Kunden trotzdem mit dem Warenwert belastet werden. Trotz des Zugangs zu gesamten Verkaufsvolumens wird damit die Sicherheit gegen Diebstahl der Waren deutlich erhöht.

Es kann vorteilhaft sein, wenn bei der Verkaufsvorrichtung gemäß dem voranstehenden Absatz die Kameravorrichtung innerhalb des Verkaufsvolumens angeordnet ist. Beispielsweise kann eine Anordnung im Türrahmen des Verkaufsvolumens oder auch in dem beweglichen Rahmen der Zugangstür vorgesehen sein. Dies erlaubt es, dass je nach Öffnungssituation die Kamera in gewünschter Weise automatisch und vor allem unveränderbar den Zugangsabschnitt im Erfassungsbereich hat und entsprechend in gewünschter Weise eine Erfassung aller Waren beim Überqueren dieses Zugangsabschnitts als physische Schnittstelle sicherstellen kann. Dadurch, dass die Kameravorrichtung beispielsweise in die Zugangstür integriert ist, ist weiter sichergestellt, dass die Privatsphäre der Kunden geschützt wird, da diese im Wesentlichen ausschließlich von der Seite des Hinterkopfes her von der Kamera erfasst werden. Selbstverständlich kann eine solche Kameravorrichtung auch zwei oder mehrere Einzelkameras aufweisen, um entsprechend zusätzliche Daten oder eine verbesserte Abdeckung zu erzielen. Auch ist es möglich, zeitlich zwischen Verkaufsvorgängen zusätzliche Kamerainformationen zu erfassen, sodass beispielsweise eine nach außen gerichtete Kamera Informationen über Kundenfrequenz, aktuelle Beleuchtungssituation oder Ähnliches liefern kann. Auch hier ist wieder gut zu erkennen, dass durch die erfindungsgemäße Struktur der dezentralen lokalen Verarbeitungseinheiten und trotzdem dem vorhandenen zentralen Auswertemodul in sehr komplexer und vor allem flexibler Weise eine Vielzahl unterschiedlicher Daten verarbeitet, analysiert und für den Verkaufsvorgang oder eine weitergehende Analyse verwendet werden können.

Ebenfalls Gegenstand der vorliegenden Erfindung ist ein Erkennungsverfahren für eine Erkennung einer bewegten Ware bei einem Einbringen und/oder bei einem Ausbringen aus dem Verkaufsvolumen einer erfindungsgemäßen Verkaufsvorrichtung. Ein solches Erkennungsverfahren weist die folgenden Schritte auf:
- Erfassen eines Waren-Gewichtssignals, welches von wenigstens einem Gewichtssensor erzeugt worden ist, mittels einem mit diesem Gewichtssensor signalkommunizierend verbundenen lokalen Verarbeitungsmodul,
- Erzeugen eines Waren-Bewegungssignals mittels des lokalen Verarbeitungsmoduls auf Basis des erfassten Waren-Gewichtsignals,
- Übermitteln des erzeugten Waren-Bewegungssignals an das Auswertmodul,
- Auswerten des übermittelten Waren-Bewegungssignals zu einem Waren-Metasignal für den Verkauf der bewegten Ware,
- Ausgabe des Waren-Metasignals.

Durch die Verwendung einer erfindungsgemäßen Verkaufsvorrichtung bringt ein erfindungsgemäßes Erkennungsverfahren die gleichen Vorteile mit sich, wie sie ausführlich mit Bezug auf eine erfindungsgemäße Verkaufsvorrichtung erläutert worden sind.

Die Ausgabe des Waren-Metasignals kann dabei zum Beispiel über eine Anzeigevorrichtung erfolgen, sodass im einfachsten Fall der Kunde über den Preis der entnommenen Ware informiert und der Bezahlvorgang durchgeführt wird. Auch für den Bezahlvorgang selbst können die Waren-Metasignale verwendet werden, indem der durch die Auswertung erzeugte Preis als Teil des Waren-Metasignals nun für den Bezahlvorgang verwendet wird. Dabei ist es unerheblich, ob Gutscheine, Open- oder Closed-Loop Bezahlsysteme oder eine Abwicklung über eine direkte Bezahlung mit Kredit- oder anderen Debitkarten Teil dieses Bezahlvorgangs ist. Auch ist es möglich, dass ein Teil dieses Ausgabeschritts Waren-Metasignale in eine Cloud in Form eines Kontrollservers sendet, um dort zusätzliche Analysevorgänge oder Kontrollvorgänge durchzuführen oder auch einen Teil der Zahlungsabwicklung durchzuführen.

Auch ist darauf hinzuweisen, dass nun lokale Datenbanken oder algorithmische Zusammenhänge in flexibler Weise verwendet werden können, um sowohl den Teilverarbeitungsschritt der Verarbeitungsmodule als auch den Endauswertungs- oder Endverarbeitungsschritt in dem zentralen Auswertmodul durchzuführen. Diese kleinen Datenbanken oder Algorithmen können fest vorgegeben oder, wie später noch erläutert, in flexibler Weise zentral durch einen Kontrollserver kontrollierbar und veränderbar ausgebildet sein.

Es kann vorteilhaft sein, wenn bei einem erfindungsgemäßen Erkennungsverfahren die Waren-Gewichtsignale wenigstens eine der folgenden Ausbildungen aufweisen:
- Stromwert und/oder Strompuls,
- Spannungswert und/oder Spannungspuls.

Bei der voranstehenden Aufzählung handelt es sich um eine nicht abschließende Liste. Je nachdem welcher tatsächliche Gewichtssensor verwendet wird, können die unterschiedlichen Ausbildungen der Waren-Gewichtsignale auch voneinander abweichen. Grundsätzlich ist es möglich, dass entweder in qualitativer Weise Änderungen der einzelnen Werte für die Waren-Gewichtssignale berücksichtigt werden. Jedoch ist es auch möglich, in quantitativer Weise absolute Messwerte in Form eines absoluten Stromwerts oder absoluten Spannungswerts zu verwenden, um entsprechend insbesondere in kontinuierlicher Weise eine Gewichtsüberwachung zu gewährleisten.

Vorteile bringt es ebenfalls mit sich, wenn bei einem erfindungsgemäßen Erkennungsverfahren die Waren-Bewegungssignale wenigstens eine der folgenden Ausbildungen aufweisen:
- Gewichtssensor-Positionen des erfassenden Gewichtsensors,
- Gewichtswert,
- Zuordnung der bewegten Waren zu einem Warentyp
- Identifikation des lokalen Verarbeitungsmoduls.

Bei der voranstehenden Aufzählung handelt es sich um eine nicht abschließende Liste. Die hier beschriebene Teilverarbeitung zu den Waren-Bewegungssignalen kann insbesondere ein Umsetzen der tatsächlichen physikalisch erfassten Messinformationen in Form von Strom- und/oder Spannungswerten beinhalten. So kann im einfachsten Fall ein Algorithmus eine Umrechnung in einen definierten Wert in Gramm für die bewegte Ware zur Verfügung stellen. Dabei kann es sich um einen Anstieg um dieses Wertes in Gramm beim Hineinbewegen einer Ware oder eine Reduktion dieses Wertes in Gramm beim Herausbewegen einer Ware aus dem Verkaufsvolumen handeln. Das Umsetzen dieser physikalischen Messergebnisse und eine erste lokale Interpretation auf Basis der Herkunft in Form der Gewichtssensor-Position erlaubt es nun, beispielsweise durch das Abgleichen mit Verarbeitungsdaten, zu bestimmen welche Ware auf dieser Gewichtssensor-Position zu erwarten ist. Im einfachsten Fall stimmen alle Informationen in korrekter Weise überein, sodass entsprechend die bewegte Ware auf diese Weise zweifelsfrei individuell erkannt worden ist. Auch ist es möglich, dass durch den Gewichtswert eine definierte Auswahl von verschiedenen Möglichkeiten zugeordneter Warentypen auf dieser Gewichtssensor-Position stattfinden kann. Ist beispielsweise auf der Aufnahmevorrichtung eine Variation unterschiedlicher Salate angeordnet, so können diese unterschiedlichen Salate sich hinsichtlich ihres zugehörigen Warengewichts unterscheiden. Entnimmt nun der Kunde einen dieser Salate als Ware so wird durch die Reduktion des Gewichts eine lokale Interpretation des lokalen Verarbeitungsmoduls möglich, sodass durch die Gewichtssensor-Position die Information über den Warentyp des Salats erkannt werden kann. Welcher exakte individuelle Salat entnommen wurde, kann nun durch die Teilverarbeitung hinsichtlich des Gewichtswertes analysiert werden, da in lokaler Verarbeitungsdaten im Verarbeitungsmodul nicht nur der Basistyp des Salats für die Ware gespeichert ist, sondern zusätzlich auch eine Unterscheidung zwischen unterschiedlichen Salattypen, beispielsweise mit Thunfisch, vegetarisch oder mit Rindfleisch, durchgeführt werden kann. Alternativ oder zusätzlich ist dieser Teil der Verarbeitung auch auf höheren Ebene, beispielsweise im Auswertmodul und/oder bei einem Verkaufssystem in einem zentralen Kontrollserver denkbar. Auch eine bidirektionale Kommunikation zwischen den beiden Ebenen ist hier möglich. Unabhängig vom Ort dieser Verarbeitung ist eine Anzeige auf der Anzeigevorrichtung der Verkaufsvorrichtung denkbar, so dass dem Nutzer auch die Information über dieses Verarbeitungsergebnis ausgegeben werden kann. Für die genaue Herkunft der bewegten Ware hinsichtlich der Aufnahmevorrichtung kann eine Identifikation über den Gewichtssensor relativ zu der jeweiligen Aufnahmevorrichtung (Beispiel: Gewichtssensor Nr. 2) und die jeweilige Aufnahmevorrichtung (Beispiels: Aufnahmevorrichtung Nr. 3) erfolgen. Bei der Inbetriebnahme der Verkaufsvorrichtung kann zum Beispiel mittels Kippschaltern an den Aufnahmevorrichtungen, insbesondere als Teil der lokalen Verarbeitungsmodule, eine mechanisch schaltbare Zuordnung der Aufnahmevorrichtung zu einer definierten und eindeutigen Position im Verkaufsvolumen erfolgen. Die Waren-Bewegungssignale weisen dann vorzugsweise diese Identifikation mit Bezug zur Nummer des Gewichtssensors und zur Nummer der Aufnahmevorrichtung auf. Weitere Vorteile sind ebenfalls erzielbar, wenn bei einem erfindungsgemäßen Erkennungsverfahren die Waren-Metasignale wenigstens eine der folgenden Ausbildungen aufweisen:
- Preis von Ware eines bewegten Warentyps,
- individueller Preis einer individuellen, bewegten Ware, insbesondere auf Basis eines Gewichtswerts,
- Haltbarkeit der bewegten Ware,
- Bezeichnung der bewegten Ware,
- Notwendigkeit einer zusätzlichen Prüfung der bewegten Ware.

Bei der voranstehenden Aufzählung handelt es sich um eine nicht abschließende Liste. Während im einfachsten Fall die Waren-Metasignale durch den Preis des bewegten Warentyps ausgebildet sind, können, wie im voranstehenden Absatz hinsichtlich der unterschiedlichen Ware in Form eines Salates bereits erläutert worden ist, auch individuelle Preise ermittelt werden. Somit kann in einem mehrstufigen Verfahren nun in einem ersten Schritt eine Gewichtsreduktion einen geänderten Stromwert zur Teilverarbeitung im Verarbeitungsmodul zur Verfügung stellen. Das Teilverarbeitungsmodul erkennt nun durch die Gewichtssensor-Position und damit die Herkunft des Gewichts des Waren-Gewichtssignals die Zuordnung zum Basistyp als Käsestück und durch die quantitative Analyse des Gewichtswert, dass es sich beispielsweise um den spezifischen Warenwert eines Käsestücks handelt. In dem Waren-Metasignal wird es nun möglich, hier einen definierten Preis zuzuordnen, welcher sogar vollständig individualisiert sein kann, also genau diesem spezifischen und individuellen Käsestück mit beispielsweise genau 321 g einen zugeordneten Preis auf Basis dieses Warengewichts abzurechnen. Zusätzlich oder alternativ können die Waren-Metasignale auch mit dem Haltbarkeitsdatum, der bisherigen Lagerung, beispielsweise unter Integration von Temperaturinformationen, der tatsächlichen Bezeichnung und Darstellung der Ware oder ähnlichen Informationen ausgestattet sein. Auch ist es bei Ungenauigkeiten hinsichtlich der Erkennung möglich, die Ware einer zusätzlichen Prüfung zu unterziehen, beispielsweise über eine Anzeigevorrichtung den Kunden aufzufordern, die Ware zusätzlich nochmals separat mittels einem außerhalb der Verkaufsvorrichtung angeordneten Warenscanner, beispielsweise einem QR-Code-Scanner, zu überprüfen.

Vorteile bringt es weiter mit sich, wenn bei einem erfindungsgemäßen Erkennungsverfahren auf Basis eines Gewichtswerts und eines Warentyps des Waren-Bewegungssignals ein individueller Preis für die individuelle, bewegte Ware bestimmt und als Teil des Waren-Metasignals ausgegeben wird. Darunter ist zu verstehen, dass nicht nur der Warentyp eine Rolle spielt, sondern darüber hinaus jede individuelle Ware gewichtsspezifisch abgerechnet werden kann. Soll die Verkaufsvorrichtung beispielsweise für individuelle Waren in Form von Käsestücken verwendet werden, so wird jede Ware einen Warentyp in Form eines Käsetyps, beispielsweise eine Unterscheidung zwischen Edamer und Gouda, aufweisen. Für jeden diesen Warentypen sind nun unterschiedliche Preise in Form von Euro pro Gramm hinterlegt. Bei der Auswertung im Auswertmodul wird nun diese Basisinformation des Warentyps, zum Beispiel durch Kamerainformationen oder die Position des erfassenden Gewichtsensors, den entsprechenden Gewichtspreis auswählen und auf diese Weise durch die quantitative Analyse des erfassten Gewichtswertes einen individuellen Preis für genau dieses eine, individuelle Käsestück als bewegte Ware ermitteln, ausgeben und von der gewünschten Bezahlungsweise des Kunden zur Abrechnung bringen.

Ein weiterer Gegenstand der vorliegenden Erfindung ist ein Computerprogrammprodukt, aufweisend Befehle, welche bei der Ausführung durch einen Computer diesen veranlassen, die Schritte eines erfindungsgemäßen Erkennungsverfahrens durchzuführen. Damit bringt ein erfindungsgemäßes Computerprogrammprodukt die gleichen Vorteile mit sich, wie sie ausführlich mit Bezug auf ein erfindungsgemäßen Erkennungsverfahren erläutert worden sind.

Darüber hinaus ist auch ein Gegenstand der vorliegenden Erfindung ein Verkaufssystem für eine Kontrolle eines Verkaufs von Waren über Verkaufsvorrichtungen gemäß der vorliegenden Erfindung. Ein solches Verkaufssystem weist wenigstens zwei, an unterschiedlichen geografischen Orten aufgestellte, Verkaufsvorrichtungen auf. Weiter ist ein zentraler Kontrollserver vorgesehen, welcher signalkommunizierend mit den Auswertmodulen der Verkaufsvorrichtung verbunden ist für einen Empfang von Waren-Metasignalen, von Waren-Bewegungssignalen und/oder von Waren-Gewichtssignalen zur Speicherung, Weiterverarbeitung und/oder Weiterleitung dieser Signale und/oder für ein Übermitteln von Verarbeitungsdaten und/oder Auswertdaten an die Auswertmodule. Hier handelt es sich um eine zentrale Kontrollierbarkeit, welche beispielsweise Preisinformationen vorgeben, anpassen oder flexibel variieren kann. Auch können hier Zahlungsschritte von ausgewählten Zahlungsmodalitäten durchgeführt werden. Nicht zuletzt kann über den zentralen Kontrollserver auch eine Auswertung von Kaufinformationen stattfinden, sodass beispielsweise verschiedene Aktionen, Preisveränderungen, Haltbarkeitsanpassungen oder Ähnliches zentral und trotzdem lokalisiert an die einzelnen Verkaufsvorrichtungen gesendet werden und in Form von Verarbeitungsdaten und/oder Auswertdaten bei der Teilverarbeitung in den lokalen Verarbeitungsmodulen oder in den zentralen Auswertmodulen der Verkaufsvorrichtungen berücksichtigt werden.

Über den Kontrollserver können weitere Auswerte- und/oder Kontrollverfahren mit den notwendigen Informationen versorgt werden. So ist es möglich eine Warenwirtschaftssystem mit diesen Daten zu füttern, Nachfüllvorgänge an den einzelnen Verkaufsvorrichtungen zu planen und deren Durchführung nachzuhalten oder sogar weiterführende Verkaufsanalysen zu ermöglichen. Sogar eine Routenplanung auf Basis der aktuellen Bestückungssituation der Verkaufsvorrichtung im Zusammenspiel mit den Aufstellorten ist möglich.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine Ausführungsform einer erfindungsgemäßen Verkaufsvorrichtung,
- Fig. 2: eine Seitenansicht einer Aufnahmevorrichtung,
- Fig. 3: die Aufnahmevorrichtung der Figur 2 in einer Teil-Draufsicht,
- Fig. 4: eine Darstellung des Signalverlaufs von zwei Aufnahmevorrichtungen,
- Fig. 5: eine weitere Ausführungsform einer Verkaufsvorrichtung,
- Fig. 6: eine weitere Ausführungsform einer Aufnahmevorrichtung in einer Seitenansicht,
- Fig. 7: die Aufnahmevorrichtung der Figur 6 in einer Teil-Draufsicht, und
- Fig. 8: eine Darstellung eines erfindungsgemäßen Verkaufssystems.

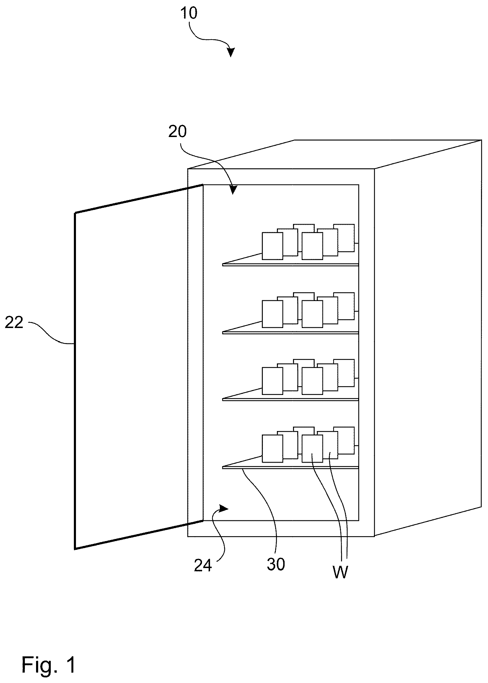

Die Figur 1 zeigt schematisch eine Verkaufsvorrichtung 10. Diese kann zum Beispiel als Kühlvorrichtung ausgebildet sein und entsprechend eines Kühlschrank aufweisen, welcher ein Verkaufsvolumen 20 ausbildet. Um in eben dieses Verkaufsvolumen 20 hineinzugelangen ist ein Zugangsabschnitt 24 vorgesehen, welcher mit einer Zugangstür 22 reversibel verschlossen werden kann. Die Figur 1 zeigt die Zugangstür 22 in der geöffneten Position, sodass ein Kunde nun in das Verkaufsvolumen 20 hineingreifen und die darin angeordneten Waren W herausnehmen kann. Die Waren W sind dabei auf einzelnen Aufnahmevorrichtungen 30, welche als Einschübe in das Verkaufsvolumen 20 ausgebildet sind, angeordnet.

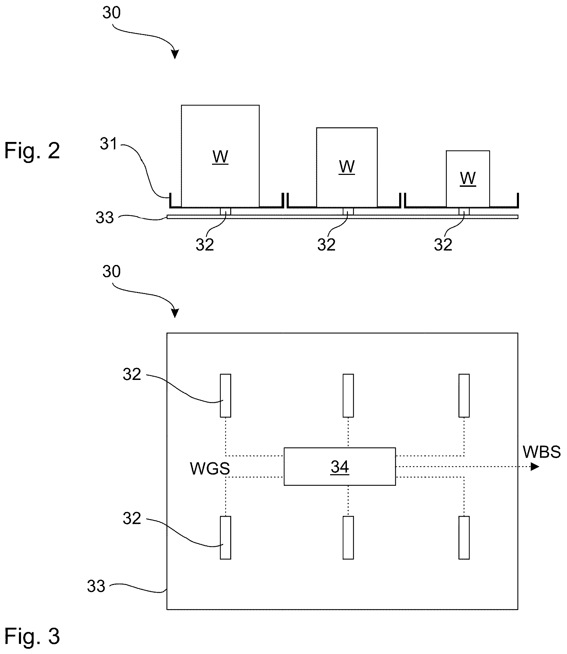

In den Figuren 2 und 3 sind Detaildarstellungen einer Aufnahmevorrichtung 30 dargestellt. Diese ist hier im Wesentlichen mit einer gestapelten Anordnung ausgebildet und weist eine Grundplatte 33 auf, welche in der Draufsicht in der Figur 3 dargestellt ist. Auf dieser Grundplatte 33 sind insgesamt sechs Gewichtssensoren 32 angeordnet, wobei immer zwei Gewichtssensoren 32 ein Aufnahmetablett 31 tragen. Das jeweilige Aufnahmetablett 31 ist hier hinsichtlich der Breite an die darauf angeordneten Waren W angepasst, sodass nun drei schienenartige Aufnahmetabletts 31 auf einer gemeinsamen Grundplatte 33 angeordnet sind, wobei für jedes Aufnahmetablett 31 zwei Gewichtssensoren 32 vorgesehen sind.

In der Figur 3 ist bereits zu erkennen, dass eine Signalverbindung der einzelnen Gewichtssensoren 32 zu dem lokalen Verarbeitungsmodul 34 vorgesehen ist, sodass zum Beispiel Spannungs- oder Stromwerte der einzelnen Gewichtssensoren 32 als Waren-Gewichtssignal WGS an dieses lokale Verarbeitungsmodul 34 übermittelt werden können. Im lokalen Verarbeitungsmodul 34 kann zum Beispiel durch einen algorithmischen Zusammenhang aus dem jeweiligen Spannungs- oder Stromwert ein zugehöriger Gewichtswert ermittelt werden. Dieser Gewichtswert, zum Beispiel in Gramm, kann nun einen Teil des Waren-Bewegungssignals WBS ausbilden.

Zusätzlich oder alternativ kann auch die Herkunft des Waren-Gewichtssignals WGS und damit die jeweilige Gewichtsposition des jeweiligen Gewichtssensors 32 in dem lokalen Verarbeitungsmodul 34 erfasst und in das Waren-Bewegungssignal WBS integriert werden.

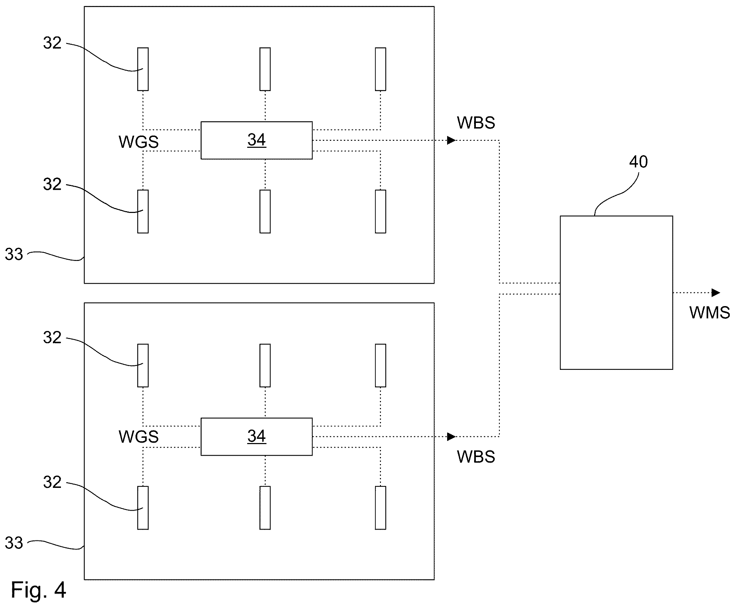

In der Figur 4 ist die weiterführende Signalisierungsmöglichkeit dargestellt. So sind hier schematisch nun zwei Aufnahmevorrichtungen 30 mit zwei Grundplatten 33 dargestellt. Diese sind hier identisch zu der Ausführungsform der Figuren 2 und 3 ausgebildet. Von jedem der lokalen Verarbeitungsmodule 34 kann nun das Waren-Bewegungssignal WBS zentral in einem Auswertmodul 40 weiter- und endverarbeitet werden. Dabei wird die Verarbeitung zu einem Waren-Metasignal WMS durchgeführt, sodass beispielsweise aus dem Waren-Bewegungssignal WBS eine Information über die entnommene Ware W, ein zugehöriger Preis, eine Berechnung eines individuellen Gewichts basierten Preises oder Ähnliches durchgeführt wird. Auch zusätzliche Informationen, wie Temperaturinformationen, Umgebungsinformationen, Kamerainformationen, Informationen über andere visuelle Daten oder Haltbarkeitsdaten der entnommenen und bewegten Ware W können in das Waren-Metasignal WMS integriert werden. Bei der Ausgabe des Waren-Metasignals WMS kann dies zum Beispiel zu einem Zahlungsdienstleister, zu separaten mobilen Endgeräten des Nutzers oder aber am später noch erläuterten Kontrollserver 110 übermittelt werden.

Auch wenn in der Figur 4 eine unidirektionale Kommunikation von den lokalen Verarbeitungsmodulen 34 bereits ausreicht, kann auch bidirektional und damit in umgekehrter Richtung eine Kommunikation von dem Auswertmodul 40 zu einem oder mehreren Verarbeitungsmodulen 34 erfolgen. Die Kommunikation "von oben nach unten" kann direkt von dem Auswertmodul 40 ausgehen oder von einem zentralen Kontrollserver 110 über dieses Auswertmodul 40 erfolgen. Hier sind beispielsweise Prüfungen der Plausibilität denkbar, um die bereits erläuterte Querbeeinflussung zwischen benachbarten Gewichtssensoren 32 zu vermeiden und zum Beispiel den bereits erläuterten Entprellschwellwert zu verwenden.

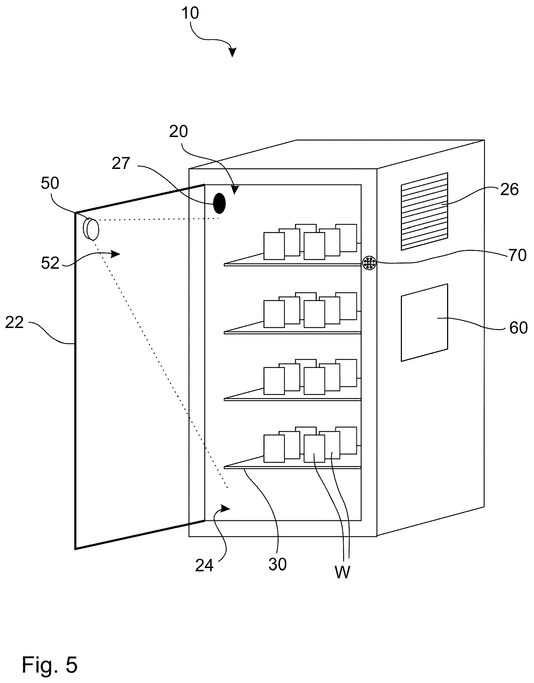

In der Figur 5 ist schematisch nochmals eine Verkaufsvorrichtung 10 dargestellt, welche auf der Ausführungsform der Figur 1 basiert. Hier handelt es sich um eine als Kühlschrank ausgebildete Verkaufsvorrichtung 10, weshalb eine Temperiervorrichtung 26 zum Kühlen des Verkaufsvolumens 20 vorgesehen ist. In dieser Darstellung ist nur die Schnittstelle zur Abgabe von Wärme an die Umgebung zu erkennen, da weitere Komponenten, wie zum Beispiel ein Kompressor, Kühlmittelleitungen oder ähnliches innerhalb des Gehäuses der Verkaufsvorrichtung 10 angeordnet sind. An der rechten Seite der Verkaufsvorrichtung 10 ist noch eine Anzeigevorrichtung 60 angeordnet, welche beispielsweise als Display ausgebildet ist und die später noch erläuterten Waren-Metasignale WMS anzeigen kann.

Zusätzlich oder alternativ zu einer Anzeigevorrichtung 60 ist auch eine Audioschnittstelle 70 möglich, wie sie in der Figur 5 in den Rahmen der Verkaufsvorrichtung 10 integriert ist. Diese Audioschnittstelle 70 ist insbesondere für eine bidirektionale Kommunikation mit einem Kunden und/oder einem Betreiber der Verkaufsvorrichtung 10 mittels Audiosignalen, insbesondere mittels Sprache ausgebildet. Die Audioschnittstelle 70 ist daher insbesondere signalkommunizierend mit dem Auswertmodul 40 verbunden und kann im einfachsten Fall Alarmsignale ausgeben. Bevorzugt ist jedoch eine kommunikationsfähige Audioschnittstelle 70, welche Informationen in Form von Sprache ausgeben und empfangen kann. Ähnlich einem Chatbot kann auf diese Weise eine native Bedienbarkeit für einen Kunden und insbesondere auch eine intuitive Ansprache und Kommunikation erfolgen. Dies erlaubt eine erleichterte Interaktion zwischen der Verkaufsvorrichtung und dem Kunden. Bei einer Kommunikation kann diese Kommunikation dann sogar ohne manuelle Interaktion, also "hands-free" erfolgen.

Um auch eine Überwachung der Temperaturgrenzen zur Verfügung stellen zu können, ist ein Temperatursensor 27 in das Verkaufsvolumen 20 integriert und insbesondere signalkommunizierend mit dem Auswertmodul 40 verbunden. Zusätzlich oder alternativ zu einem übergeordneten Temperatursensor 27 sind auch lokale Temperatursensoren 27 in den einzelnen lokalen Verarbeitungsmodulen 34 denkbar, welche entsprechen die Temperatur für die jeweilige Aufnahmevorrichtung 30 erfassen und überwachen können. Auf Basis der Temperatursignale sind die bereits erläuterten verschiedenen Aktionen, wie eine Ausgabe eines Alarms, ein Verriegeln der Zugangstür 22 oder ähnliches möglich.

Auch ist hier zusätzlich eine Kameravorrichtung 50 vorgesehen, welche in der Zugangstür 22 auf deren Innenseite angeordnet ist. Die Kameravorrichtung 40 weist einen Erfassungsbereich 52 auf, welcher in der geöffneten Situation der Zugangstür 22 nun den Zugangsabschnitt 24 abdeckt und damit Einblick in das Verkaufsvolumen 20 hat und insbesondere jegliche Ware W, welche diesen Zugangsabschnitt 24 passiert, erkennen und erfassen kann. Auch diese Kameravorrichtung 50 ist vorzugsweise signalkommunizierend mit dem Auswertmodul 40 verbunden, um die visuell erfassten Informationen dort zur Verfügung zu stellen und in die Endverarbeitung zum Waren-Metasignal WMS einfließen zu lassen. Zusätzlich oder alternativ sind auch Kameravorrichtungen 50 innerhalb des Verkaufsvolumens 20 denkbar, welche durch eine transparente Zugangstür 22 die Umgebung erfassen können. Hier sind weitere Datenerfassungen zu weitergehenden Analysen denkbar. Ebenfalls zusätzlich oder alternativ sind auch Kameravorrichtungen 50 an den einzelnen Aufnahmevorrichtungen 30 denkbar, welche eine direkte Erfassung der dort abgestellten Waren W erlaubt. Über Bildauswertung kann bereits im Lagerzustand der Waren W eine Erkennung der Waren W oder des Warentyps erfolgen. Auch eine Erfassung von Codierungen auf den Waren W, beispielsweise in Form eines QR-Codes ist denkbar.

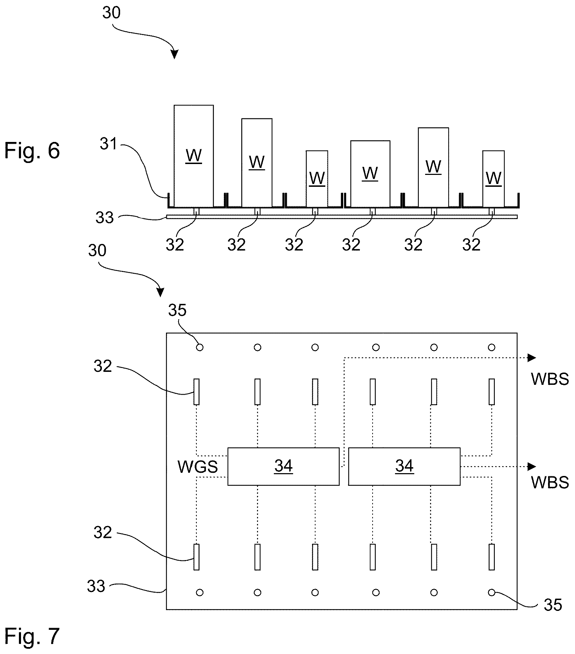

Die Figuren 6 und 7 stellen eine alternative Ausführungsform zu der Variante der Figuren 2 und 3 dar. Hier hat sich die Anzahl der Aufnahmetabletts 31 verdoppelt, da entsprechend schmälere Waren W aufgenommen werden sollen. Gleichzeitig ist für jedes Aufnahmetablett 31 wieder ein Paar von zwei Gewichtssensoren 32 am vorderen und hinteren Ende vorgesehen, sodass sich entsprechend auch die Anzahl der Gewichtssensoren 32 auf zwölf Stück verdoppelt hat. Für eine besonders einfache und kostengünstige Ausgestaltung ist nun jedes lokales Verarbeitungsmodul 34 auf eine Anzahl von sechs damit kommunizierenden Gewichtssensoren 32 begrenzt. Durch die erhöhte Anzahl von insgesamt zwölf Gewichtsensoren 32 bei dieser Ausführungsform sind dementsprechend zwei, insbesondere identisch ausgebildete, Verarbeitungsmodule 34 vorgesehen, welche in paralleler Weise jeweils ein Waren-Bewegungssignal WBS erzeugen und in paralleler Weise an das zentrale Auswertmodul 40 übermitteln können.

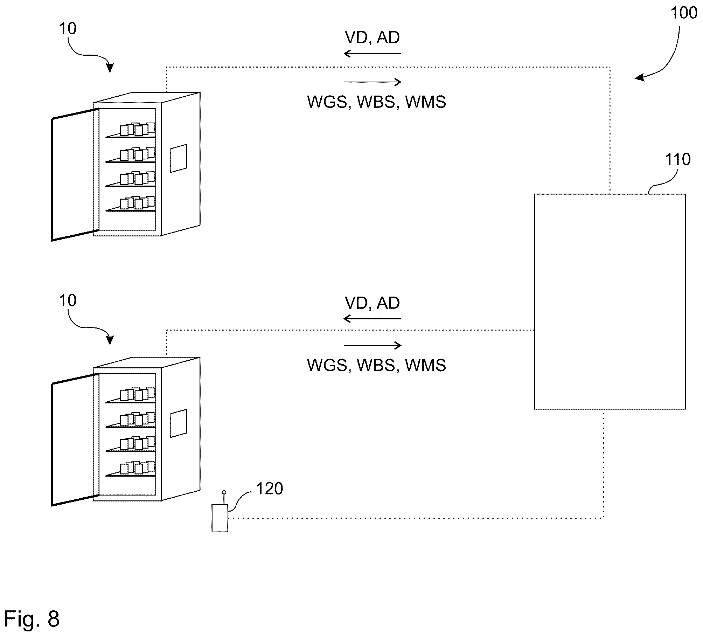

Die Figur 8 zeigt nun die Integration solcher Verkaufsvorrichtungen 10 in einem Verkaufssystem 100. Schematisch sind hier zwei Verkaufsvorrichtungen 10 dargestellt, wobei in der Realität eine deutlich größere Anzahl von bis zu hundert oder sogar mehreren tausend Verkaufsvorrichtungen 10 denkbar ist. Ein zentraler Kontrollserver 110 kann auch als cloudbasiertes System verstanden werden und steht in bidirektionaler Kommunikation mit den einzelnen Verkaufsvorrichtungen 10. Für eine reine Analyse des Kaufverhaltens oder der aktuellen Situation in den Verkaufsvorrichtungen 10 kann es ausreichen, wenn eine Übermittlung der Waren-Gewichtssignale WGS, der Waren-Bewegungssingale WBS und/oder der Waren-Metasignale WMS in unidirektionaler Weise an den Kontrollserver 110 durchgeführt wird. Bevorzugt ist es jedoch, wenn eine bidirektionale Kommunikation auch vom Kontrollserver 110 an die Verkaufsvorrichtungen 10 möglich ist und insbesondere Verarbeitungsdaten VD und/oder Auswertdaten AD übermittelt werden. Bei diesen Verarbeitungsdaten und Auswertdaten handelt es sich um Daten, welche in Form der Verarbeitungsdaten in lokalen Verarbeitungsmodulen 34 und in Form der Auswertedaten AD in den Auswertemodulen 40 eingesetzt werden. Dabei kann es sich um algorithmische Zusammenhänge, flexible unterschiedliche Preistabellen, Gewichtsinformationen, Wareninformationen, Haltbarkeitsinformationen oder weitere Daten handeln, welche bei der lokalen Teilverarbeitung in den Verarbeitungsmodulen und/oder der Endverarbeitung in den Auswertemodulen 40 verwendet werden. Weitere Information können hier Nährwerte, Menge, Rabattinforationen, Menüs, Rechnungen, Bezahlungsinformationen oder ähnliches sein. Dadurch können an Käufer individuell angepasste Strategien implementiert werden, um den Umsatz zu steigern. Durch eine Einbindung in ein Warenwirtschaftssystem ist auch digitales Kommissionieren denkbar. Auch noch weitergehende Nutzung wir die Verwendung von Bezahlkarten, Coupons oder sogar die Datennutzung für personalisierte Werbung ist hier grundsätzlich denkbar.

Die Figur 8 zeigt zusätzlich noch, dass der Kontrollserver 110 sich mit Mobilgeräten 120 verbinden kann, sodass beispielsweise der Betreiber der Verkaufsvorrichtungen oder die Befüller, welcher die Verkaufsvorrichtungen 10 mit Waren W zum Verkauf befüllen, entsprechende lokale Software in Form von Apps auf ihren Mobilgeräten 120 verwenden. Auch die Kunden können durch diese Kommunikation mit dem Kontrollserver 110 beispielsweise Zahlungsvorgänge mittels ihres eigenen Mobilgeräts 120 durchführen und entsprechend eine Kommunikation über den Kontrollserver 110 in indirekter Weise auch mit der Verkaufsvorrichtung 10 durchführen.

Die voranstehende Erläuterung der Ausführungsformen beschreibt die vorliegende Erfindung ausschließlich im Rahmen von Beispielen.

### Bezugszeichenliste

- 10: Verkaufsvorrichtung
- 20: Verkaufsvolumen
- 22: Zugangstür
- 24: Zugangsabschnitt
- 26: Temperiervorrichtung
- 27: Temperatursensor
- 30: Aufnahmevorrichtung
- 31: Aufnahmetablett
- 32: Gewichtssensor
- 33: Grundplatte
- 34: Verarbeitungsmodul
- 35: Zirkulationsöffnung
- 40: Auswertmodul
- 50: Kameravorrichtung
- 52: Erfassungsbereich
- 60: Anzeigevorrichtung
- 70: Audioschnittstelle

- 100: Verkaufssystem
- 110: Kontrollserver
- 120: Mobilgerät

- W: Ware
- WGS: Waren-Gewichtssignal
- WBS: Waren-Bewegungssignal
- WMS: Waren-Metasignal

- VD: Verarbeitungsdaten
- AD: Auswertdaten

## Patentansprüche

1. Verkaufsvorrichtung (10) für einen Verkauf von Waren (W), aufweisend ein Verkaufsvolumen (20), in welchem wenigstens zwei Aufnahmevorrichtungen (30) für eine Aufnahme der Waren (W) angeordnet sind, wobei das Verkaufsvolumen (20) einen mit einer Zugangstür (22) reversibel verschlossenen Zugangsabschnitt (24) aufweist für ein Einbringen von Waren (W) in und ein Ausbringen von Waren (W) aus dem Verkaufsvolumen (20), wobei auf wenigstens zwei Aufnahmevorrichtungen (30) zumindest zwei Gewichtssensoren (32) angeordnet sind für ein Erzeugen eines Waren-Gewichtssignals (WGS) zu einer oder mehreren auf der Aufnahmevorrichtung (30) angeordneten Waren (W) jeweils an einer Gewichtssensor-Position der Aufnahmevorrichtung (30), **dadurch gekennzeichnet, dass** auf den wenigstens zwei Aufnahmevorrichtungen (30) mit Gewichtssensoren (32) zumindest ein lokales Verarbeitungsmodul (34) angeordnet ist, welches signalkommunizierend mit den Gewichtssensoren (32) der jeweiligen Aufnahmevorrichtung (30) verbunden und zumindest für eine Teilverarbeitung der Waren-Gewichtssignale (WGS) zur Erzeugung von Waren-Bewegungssignalen (WBS) ausgebildet ist, wobei die Verkaufsvorrichtung (10) weiter ein Auswertmodul (40) aufweist, welches mit den Verarbeitungsmodulen (34) signalkommunizierend verbunden ist für ein Auswerten der Waren-Bewegungssignale (WBS) zu Waren-Metasignalen (WMS) für den Verkauf der Waren (W).

2. Verkaufsvorrichtung (10) nach Anspruch 1, **dadurch gekennzeichnet, dass** das Verkaufsvolumen (20) thermisch gegen die Umgebung isoliert ist und eine Temperiervorrichtung (26) für ein gezieltes Temperieren des Verkaufsvolumens (20) vorgesehen ist.

3. Verkaufsvorrichtung (10) nach einem der voranstehenden Ansprüche, **dadurch gekennzeichnet, dass** im Verkaufsvolumen (20) wenigstens ein Temperatursensor (27) angeordnet ist für ein Erzeugen eines Temperatursignals, wobei der wenigstens eine Temperatursensor (27) signalkommunizierend mit wenigstes einem lokalen Verarbeitungsmodul (34) und/oder mit dem Auswertmodul (40) verbunden ist.

4. Verkaufsvorrichtung (10) nach einem der voranstehenden Ansprüche, **dadurch gekennzeichnet, dass** auf wenigstens einer Aufnahmevorrichtung (30) wenigstens zwei lokale Verarbeitungsmodule (34) angeordnet sind, wobei die Anzahl der Gewichtssensoren (32) größer als die Anzahl der Verarbeitungsmodule (34) ist.

5. Verkaufsvorrichtung (10) nach einem der voranstehenden Ansprüche, **dadurch gekennzeichnet, dass** wenigstens eine Aufnahmevorrichtung (30) wenigstens zwei Aufnahmetabletts (31) aufweist, wobei die Gewichtssensoren (32) und insbesondere auch lokale Verarbeitungsmodule (34) zwischen den Aufnahmetabletts (31) und einer Grundplatte (33) der Aufnahmevorrichtungen (30) angeordnet sind.

6. Verkaufsvorrichtung (10) nach Anspruch 5, **dadurch gekennzeichnet, dass** die Grundplatten (33) der Aufnahmevorrichtungen (30) Zirkulationsöffnungen (35) aufweisen für eine verbesserte Zirkulation von Luft innerhalb des Verkaufsvolumens (20).

7. Verkaufsvorrichtung (10) nach einem der voranstehenden Ansprüche, **dadurch gekennzeichnet, dass** wenigstens eine Kameravorrichtung (50) vorgesehen ist mit einem Erfassungsbereich (52), welcher den Zugangsabschnitt (24) wenigstens abschnittsweise, insbesondere vollständig oder im Wesentlichen vollständig abdeckt, zur optischen Erfassung von Waren (W) beim Einbringen und/oder beim Ausbringen aus dem Verkaufsvolumen (20).

8. Verkaufsvorrichtung (10) nach Anspruch 7, **dadurch gekennzeichnet, dass** die Kameravorrichtung (50) innerhalb des Verkaufsvolumens (20) angeordnet ist.

9. Erkennungsverfahren für eine Erkennung einer bewegten Ware (W) bei einem Einbringen und/oder bei einem Ausbringen aus einem Verkaufsvolumen (20) einer Verkaufsvorrichtung (10) mit den Merkmalen eines der Ansprüche 1 bis 8, aufweisend die folgenden Schritte:
- Erfassen eines Waren-Gewichtssignals (WGS), welches von wenigstens einem Gewichtssensor (32) erzeugt worden ist mittels einem mit diesem Gewichtssensor (GS) signalkommunizierend verbundenen lokalen Verarbeitungsmodul (34),
- Erzeugen eines Waren-Bewegungssignals (WBS) mittels des lokalen Verarbeitungsmoduls (34) auf Basis des erfassten Waren-Gewichtssignals (WGS),
- Übermitteln des erzeugten Waren-Bewegungssignals (WBS) an das Auswertmodul (40),
- Auswerten des übermittelten Waren-Bewegungssignals (WBS) zu einem Waren-Metasignal (WMS) für den Verkauf der bewegten Ware (W),
- Ausgabe des Waren-Metasignals (WMS).

10. Erkennungsverfahren nach Anspruch 9, **dadurch gekennzeichnet, dass** die Waren-Gewichtssignale (WGS) wenigstens eine der folgenden Ausbildungen aufweisen:
- Stromwert und/oder Strompuls
- Spannungswert und/oder Spannungspuls

11. Erkennungsverfahren nach einem der Ansprüche 9 oder 10, **dadurch gekennzeichnet, dass** die Waren-Bewegungssignale (WBS) wenigstens eine der folgenden Ausbildungen aufweisen:
- Gewichtssensor-Position des erfassenden Gewichtssensors (32)
- Gewichtswert
- Zuordnung der bewegten Ware (W) zu einem Warentyp
- Identifikation des lokalen Verarbeitungsmoduls (34)

12. Erkennungsverfahren nach einem der Ansprüche 9 bis 11, **dadurch gekennzeichnet, dass** die Waren-Metasignale (WMS) wenigstens eine der folgenden Ausbildungen aufweisen:
- Preis von Waren (W) eines bewegten Warentyps
- Individueller Preis einer individuellen, bewegten Ware (W), insbesondere auf Basis eines Gewichtswerts
- Haltbarkeit der bewegten Ware (W)
- Bezeichnung der bewegten Ware (W)
- Notwendigkeit einer zusätzlichen Prüfung der bewegten Ware (W)

13. Erkennungsverfahren nach einem der Ansprüche 9 bis 12, **dadurch gekennzeichnet, dass** auf Basis eines Gewichtswerts und eines Warentyps des Waren-Bewegungssignals (WBS) ein individueller Preis für die individuelle, bewegte Ware (W) bestimmt und als Teil des Waren-Metasignals (WMS) ausgegeben wird.

14. Computerprogrammprodukt, aufweisend Befehle, welche bei der Ausführung durch einen Computer diese veranlassen die Schritte eines Erkennungsverfahrens mit den Merkmalen eines der Ansprüche 9 bis 13 auszuführen.

15. Verkaufssystem (100) für eine Kontrolle eines Verkaufs von Waren (W) über Verkaufsvorrichtungen (10) mit den Merkmalen eines der Ansprüche 1 bis 8, aufweisend wenigstens zwei, an unterschiedlichen geographischen Orten aufgestellten Verkaufsvorrichtungen (10), weiter aufweisend einen zentralen Kontrollserver (110), welcher signalkommunizierend mit den Auswertmodulen (40) der Verkaufsvorrichtungen (10) verbunden ist für einen Empfang der Waren-Metasignale (WMS), der Waren-Bewegungssignale (WBS) und/oder der Waren-Gewichtssignale (WGS), für eine Speicherung, eine Weiterverarbeitung und/oder eine Weiterleitung dieser Signale und/oder für ein Übermitteln von Verarbeitungsdaten (VD) und/oder von Auswertdaten (AD) an die Auswertmodule (40).
